# EUROPÄISCHE PATENTANMELDUNG

(11) **EP 0 865 855 A1**
(43) Veröffentlichungstag der Anmeldung: **23.09.1998**
(21) Anmeldenummer: 97890045.4
(22) Anmeldetag: 12.03.1997
(51) Int. Cl.: B23D 61/02

(54) **Kreissägeblatt mit verdicktem Nabenbereich**

(71) Anmelder: Martin Miller Aktiengesellschaft, 3133 Traismauer (AT)
(72) Erfinder: Lohmann, Erich, Dipl.-Ing., 3133 Traismauer (AT)
(74) Vertreter: Patentanwälte BARGER, PISO & PARTNER

(57) **Zusammenfassung**

Die Erfindung betrifft ein Kreissägeblatt, insbesondere für Holz, mit einem verstärkten Nabenbereich, die aus einem Sägeblatt (1) konstanter Stärke und zumindest einer Nabenscheibe (2) besteht, dadurch gekennzeichnet, daß die Nabenscheibe (2) mit dem Sägeblatt (1) flächig und bis zum Umfang der Nabenscheibe verklebt ist.
In einer bevorzugten Ausführungsform ist vorgesehen, daß der Klebstoff entlang des Umfanges der Nabenscheibe (2) zwischen dieser und dem Sägeblatt (1) eine Abdeckung nach Art einer Hohlkehle (3) bildet.

Die Erfindung betrifft weiter ein Verfahren zur Herstellung eines solchen Kreissägeblattes mit Löchern (4) für die Befestigungsschrauben des Kreissägeblattes im Flanschbereich, dadurch gekennzeichnet, das die Löcher (4) nach dem Verkleben des Sägeblattes (1) mit der Nabenscheibe (2) gebohrt und gegebenenfalls konisch aufgeweitet werden. Vorzugsweise wird die Nabenscheibe (2) nach dem Verkleben mit dem Sägeblatt auf einer Präzisionsschleifmaschine überschliffen, um die im Flanschbereid notwendige Dickentroleranz des Kreissägeblattes von etwa ± 0,02 mm zu erhalten.

## Beschreibung

Die Erfindung betrifft ein Kreissägeblatt mit verdicktem Nabenbereich, das aus einem Sägeblatt konstanter Dicke und einer Nabenscheibe besteht.

Derartige Kreissägeblätter werden in der holzverarbeitenden Industrie, insbesondere, aber nicht ausschließlich, bei sogenannten Profilieranlagen verwendet, in denen aus im wesentlichen runden und annähernd geraden entrindeten Stämmen Profile geschnitten bzw. gefräst werden, die in der Folge zu Brettern verarbeitet werden. Die dabei anfallenden Arbeitsschritte umfassen im wesentlichen das Abfräsen der Schwarten, um dabei Holzspäne zu gewinnen, das Abfräsen der verbleibenden Bereiche, die noch die ursprüngliche äußere Oberfläche aufweisen, um vier schmale Bretter innerhalb der Schwarten, aber noch außerhalb des sodann rechteckigen oder quadratischen Stammes absägen zu können, das Absägen dieser schmäleren Bretter und schließlich das endgültige Zersägen des Stammes.

Die für das Absägen der dünneren Bretter eingesetzten Kreissägeblätter weisen aus verschiedenen dynamischen und mechanischen Gründen verdickte Nabenbereiche auf. Sie werden mittels mehrerer Senkkopfschrauben im Flanschbereich auf einer stirnseitigen Schulter einer Welle befestigt, wobei die Zentrierung über eine zentrale Bohrung im Kreissägeblatt erfolgt.

Bei der üblichen, einteiligen, Ausführung solcher Kreissägeblätter wird ihre Herstellung verteuert, da der radial äußere Teil des Sägeblattes durch spanende Bearbeitung auf die endgültige Stärke verringert werden muß, was bei der hohen Qualität des für das Sägeblatt verwendeten Stahles eine teure und zeitraubende Arbeit ist. Dabei spielt der Verlust an Werkstoff am Sägeblatt ebenso eine Rolle, wie die Notwendigkeit, hochwertige Werkzeuge zur Abtragung des überflüssigen Materials einzusetzen.

Es wurde daher bereits versucht, derartige Kreissägeblätter durch das Annieten von Nabenscheiben auf Sägeblätter konstanter Dicke herzustellen, doch hat sich gezeigt, daß sich durch die im Betrieb unvermeidlichen Schwingungen und Vibrationen zwischen der Nabenscheibe und dem nunmehr durchgehend gleich stark ausgebildeten Sägeblatt kurzzeitig Bereiche ausbilden, in denen kein Kontakt zwischen diesen beiden Teilen besteht und daß es immer wieder Sägespänen oder anderen in der Luft befindlichen Partikeln gelingt, in die so gebildeten Taschen zu gelangen, was dazu führt, daß diese sich fortlaufend vergrößern und die Nieten, die den Zusammenhalt zwischen dem Sägeblatt und der Nabenscheibe sichern, so zusätzlich auf Zug belasten, daß diese versagen und reißen oder brechen.

Außerdem ändert sich der Planlauf der Säge durch diesen Verzug im Flanschbereich, sodaß ein mehrmaliger Einsatz problematisch ist.

Die Erfindung bezweckt, hier Abhilfe zu schaffen und schlägt dazu vor, die Nabenscheibe bzw. die Nabenscheiben auf das Sägeblatt aufzukleben.

Versuche haben gezeigt, daß eine solche flächige Verklebung, insbesondere wenn sie den gesamten Umfang der Nabenscheibe erfaßt und am Übergang zwischen Sägeblatt und Nabenscheibe einen umlaufenden Klebestrich aufweist, nicht nur in der Lage ist, alle mechanischen und dynamischen Anforderungen an ein solches Kreissägeblatt zu erfüllen, sondern auch das Eindringen von Fremdkörpern zwischen die Nabenscheibe und das Sägeblatt auf Dauer zuverlässig verhindert.

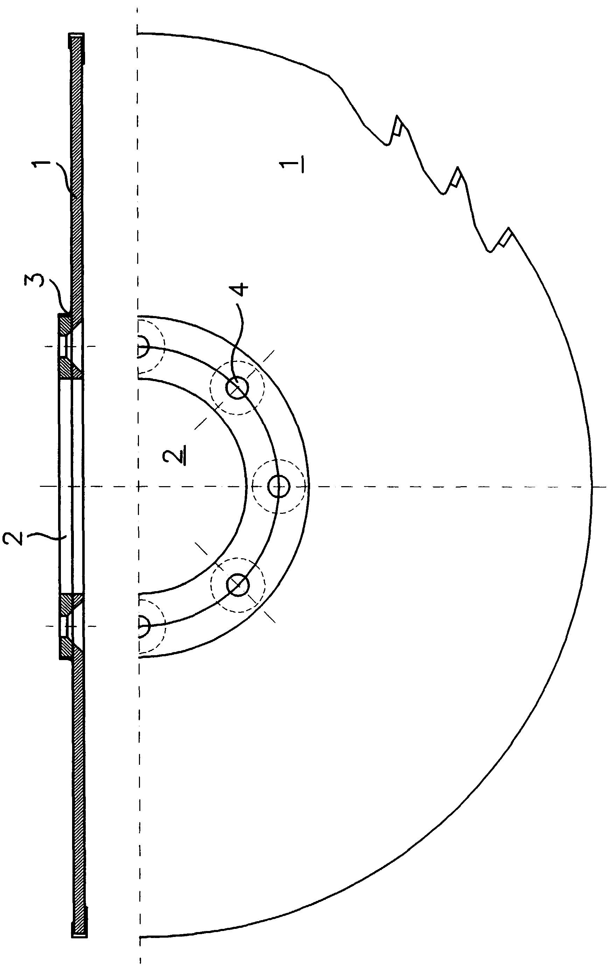

Die Erfindung wird im folgenden an Hand der Zeichnung näher dargestellt. Dabei zeigt die einzige Figur ein erfindungsgemäß ausgebildetes Kreissägeblatt in Draufsicht und im Radialschnitt.

Ein über seine gesamte Fläche gleich stark ausgebildetes Sägeblatt 1 ist im Bereich seiner Nabe (Flanschbereich) mit einer Nabenscheibe 2 verklebt, durch die im wesentlichen die Stärke erreicht wird, die üblicherweise einstückige Kreissägeblätter mit verstärktem Nabenbereich aufweisen.

Der Klebstoff 3 ist flächig und bevorzugt lückenlos aufgetragen, wobei bevorzugt wird, daß er am äußeren Umfang der Nabenscheibe bis zu diesem Umfang reicht und besonders bevorzugt, wie dargestellt, nach Art einer Hohlkehle den Stoß zwischen Sägeblatt 1 und Nabenscheibe 2 überdeckt.

Als Klebstoff hat sich besonders Methacrylat, insbesonders Harnstoffmethacrylat bewährt. Da die erfindungsgemäß verwendbaren Klebstoffe im Handel erhältlich sind, ist es allgemein möglich, Klebstoffe zu verwenden, deren Schubspannung im ausgehärteten Zustand, gemessen nach DIN 53283, zwischen 12 und 25 N/mm² liegt und deren Zugspannung, gemessen nach DIN 53288 zwischen 15 und 25 N/mm² liegt. Als Beispiele für derartige Klebstoffe seien hier nur LOCTITE Product 326 und omniFIT seal 50 H der omniTECHNIC GmbH genannt.

Nach dem Verkleben wird die Nabenscheibe 2 auf einer Präzisionsschleifmaschine auf die erforderliche Dickentoleranz des Kreissägeblattes im Flanschbereich von ± 0,02 mm geschliffen. Es kann auch die Zentrierbohrung überschliffen werden, um bestmögliche Übereinstimmung zwischen dem Sägeblatt 1 und der Nabenscheibe 2 zu erzielen, wenn nicht diese Zentrierbohrungen verwendet werden, um sowohl das Sägeblatt als auch die Nabenscheibe beim Verkleben zu zentrieren. All dies kann vor oder nach dem Bohren der Löcher 4 (siehe weiter unten) erfolgen.

Es bringt die Herstellung der erfindungsgemäßen Kreissägeblätter in Kenntnis der Erfindung keine Probleme mit sich. Die Dicke der Klebeschicht hängt vom verwendeten Klebstoff ab und liegt beispielsweise bei Verwendung von Harnstoffmethacrylat zwischen 0,1 und 0,5 mm, wobei die kleinere Schichtdicke bevorzugt wird.

Gleichartige Klebstoffe können selbstverständlich vom Fachmann in Kenntnis der Erfindung und der Produktbeschreibungen der einzelnen Klebstoffhersteller nach einigen Versuchen ausgewählt und verwendet werden.

Die dargestellten Befestigungsbohrungen 4, die für Senkschrauben ausgebildet sind, mit denen das Sägeblatt an seiner Welle befestigt wird, werden erst im fertig geklebten Zustand des Sägeblattes gebohrt und konisch aufgeweitet, da dies einerseits einfacher und zweitens genauer als bei getrennter Herstellung ist. Es zeigt sich auch dabei die Haltbarkeit der erfindungsgemäß angewandten Klebverbindung.

Ein weiterer Vorteil des Klebens sowohl gegenüber der einstückigen Ausbildung als auch gegenüber der genieteten Verbindung ist die Schaffung eines gleichmäßigen Spannungszustandes sowohl bei der Herstellung des Sägeblattes als auch während dessen Betrieb. Dazu kommt, daß das erfindungsgemäß hergestellte Sägeblatt einfacher als die anderen zu Richten ist und vor allem der Vorteil der geringeren Rißgefahr im Übergangsbereich gegenüber den einstückigen Blättern. Dieser Übergangsbereich wird zwar ausgerundet, um die Kerbenbildung zu verhindern, doch erfolgt dies spanend, sodaß die Bildung von mikroskopisch kleinen Rissen und Kerben unvermeidlich ist. Diese sind regelmäßig Ausgangspunkte für Risse, die die Lebensdauer des Sägeblattes deutlich herabsetzen.

Die Erfindung ist nicht auf das dargestellte oder beschriebene Ausführungsbeispiel beschränkt. So ist es möglich, die Anzahl der Löcher 4 zu ändern oder zu beiden Seiten des Sägeblattes 1 Nabenscheiben 2 vorzusehen und mit dem Sägeblatt zu verkleben. Die Nabenscheiben bestehen bevorzugt aus dem gleichen Material wie die Sägeblätter, zumindest aber sollen sie im Arbeitstemperaturbereich einen möglichst gleichen thermischen Ausdehnungskoeffizienten wie diese haben.

## Patentansprüche

1. Kreissäge, insbesondere für Holz, mit einem verstärkten Nabenbereich, die aus einem Sägeblatt (1) konstanter Stärke und zumindest einer Nabenscheibe (2) besteht, dadurch gekennzeichnet, daß die Nabenscheibe (2) mit dem Sägeblatt (1) flächig und bis zum Umfang der Nabenscheibe verklebt ist.

2. Sägeblatt nach Anspruch 1, dadurch gekennzeichnet, daß der Klebstoff entlang des Umfanges der Nabenscheibe (2) zwischen dieser und dem Sägeblatt (1) eine Hohlkehle (3) ausbildet.

3. Verfahren zur Herstellung eines Kreissägeblattes mit Löchern (4) für die Befestigungsschrauben des Kreissägeblattes im Flanschbereich nach Anspruch 1 oder 2, dadurch gekennzeichnet, daß die Löcher (4) nach dem Verkleben des Sägeblattes (1) mit der Nabenscheibe (2) gebohrt und gegebenenfalls konisch aufgeweitet werden.

4. Verfahren zur Herstellung eines Kreissägeblattes nach Anspruch 1 oder 2, dadurch gekennzeichnet, daß nach dem Verkleben mit dem Sageblatt die Nabenscheibe (2) auf einer Präzisionsschleifmaschine überschliffen wird, um die im Flanschbereich notwendige Dickentoleranz des Kreissägeblattes von etwa ± 0,02 mm zu erhalten.
